# EUROPEAN PATENT APPLICATION

(11) **EP 4 401 024 A1**
(43) Date of publication of application: **17.07.2024**
(21) Application number: 23151208.8
(22) Date of filing: 11.01.2023
(51) Int. Cl.: G06Q 20/02, G06Q 20/04, G06Q 20/06, G06Q 20/08, G06Q 20/36, G06Q 20/38

(54) **METHOD AND SYSTEM FOR ENABLING PAY FROM CARD THROUGH OPEN BANKING**

(71) Applicant: Mastercard International Incorporated, Purchase, NY 10577 (US)
(72) Inventor: LUNDH, Cecilia Charlotte, London SE22 8QR (GB); HOSNY, Ahmed, D18 Dublin (IE)
(74) Representative: Keltie LLP

(57) **Abstract**

Methods and systems for enabling credit card payments in open banking via a mapped virtual account includes: receiving, by a receiver of a processing server, a registration request, the registration request including at least payment details for a credit transaction account and a profile identifier; generating, by a processor of the processing server, a virtual account, the generated virtual account including at least an account identifier and a balance; mapping, by the processor of the processing server, the generated virtual account to the credit transaction account in a mapping database of the processing server; storing, in an account database of the processing server, at least the account identifier for the generated virtual account in an account profile associated with the profile identifier; and transmitting, by a transmitter of the processing server, at least the account identifier upon receipt of a payment request for payment via an open banking infrastructure.

## Description

### FIELD

The present disclosure relates to enabling card payments through open banking, specifically enabling card payments to be made via an open banking structure through the use of a mapped virtual account.

### BACKGROUND

**Traditionally,** payment transactions have been conducted via the use of payment networks, which operate their own communication infrastructure separate from the Internet, also known as "payment rails," that is used for transmission of transaction messages. An entity wanting to participate in payment transactions would have to have some manner of connecting to these payment rails, often via an authorized entity such as a financial institution. Payment rails provide a safe and trusted infrastructure to use for payment transactions but can sometimes pose a high barrier for entry for a new entity. In addition, there are only a handful of payment networks that operate, which leaves an interested entity with few options with respect to traditional payment transactions.

In recent years, advancements in network technology have resulted in a faster, more far reaching, and more secure Internet. As a result, a new system has formed that can be used by consumers and merchants for banking services, referred to as "open banking." Open banking refers to banking through the use of infrastructure separate from payment rails, which most often utilizes the Internet and operates through a series of application programming interfaces (APIs) between participants. While banks and other traditional financial institutions utilize open banking, the lower barrier to entry and wider availability for open banking has left to participation by new financial service providers.

In a traditional open banking transaction, a first party will transfer money to a second party from an established depository account authorized for use through an open banking provider. Currently, there are no capabilities with open banking to enable the use of a credit card for payment. This can significantly hamper adoption of open banking due to consumers that rely on credit when making transactions as well as consumers that are interested in the added values provided by credit card accounts, such as the consumer protections, fraud protections, and reward programs. Thus, there is a need for a technological improvement to open banking systems to enable a credit card transaction to be conducted through an open banking infrastructure.

### SUMMARY

**The** present disclosure provides a description of systems and methods for enabling credit card payments in open banking via a mapped virtual account. A consumer interested in using a credit card via open banking can register their credit card with an open banking provider or another entity associated therewith. The provider can generate a virtual account that appears as a standard debit account that is then mapped to the credit card account. The consumer is presented the mapped virtual account along with any debit accounts for selection for payment in a transaction. If the consumer selects the mapped virtual account, the provider identifies the mapped credit card account and initiates a standard credit card transaction for payment from the credit card account to the merchant. The merchant is notified that payment was made successfully from the consumer via the open banking platform using the virtual account, which appears to the merchant as a standard debit account with the open banking provider. The result is payment made by the consumer via open banking, without any change in behavior or operation by the merchant and with the consumer participation being limited to the onboarding of their credit card account, which provides significant advantages and new opportunities over traditional systems.

**A** method for enabling credit card payments in open banking via a mapped virtual account includes: receiving, by a receiver of a processing server, a registration request, the registration request including at least payment details for a credit transaction account and a profile identifier; generating, by a processor of the processing server, a virtual account, the generated virtual account including at least an account identifier and a balance; mapping, by the processor of the processing server, the generated virtual account to the credit transaction account in a mapping database of the processing server; storing, in an account database of the processing server, at least the account identifier for the generated virtual account in an account profile associated with the profile identifier; and transmitting, by a transmitter of the processing server, at least the account identifier upon receipt of a payment request for payment via an open banking infrastructure.

**A** system for enabling credit card payments in open banking via a mapped virtual account includes: an open banking infrastructure; and a processing server, the processing server including a receiver receiving a registration request, the registration request including at least payment details for a credit transaction account and a profile identifier, a processor generating a virtual account, the generated virtual account including at least an account identifier and a balance, mapping the generated virtual account to the credit transaction account in a mapping database of the processing server, and storing, in an account database of the processing server, at least the account identifier for the generated virtual account in an account profile associated with the profile identifier, and a transmitter transmitting at least the account identifier upon receipt of a payment request for payment via the open banking infrastructure.

### BRIEF DESCRIPTION OF THE DRAWING FIGURES

The scope of the present disclosure is best understood from the following detailed description of exemplary embodiments when read in conjunction with the accompanying drawings. Included in the drawings are the following figures:
FIG. 1 is a block diagram illustrating a high-level system architecture for enabling credit card payments in open banking in accordance with exemplary embodiments.
FIG. 2 is a block diagram illustrating the processing server in the system of FIG. 1 for enabling credit card payments in open banking in accordance with exemplary embodiments.
FIGS. 3A-3C are a flow diagram illustrating a process for enabling credit card payments in open banking in the system of FIG. 1 in accordance with exemplary embodiments.
**FIG.** 4 is a flow chart illustrating an exemplary method for enabling credit card payments in open banking via a mapped virtual account in accordance with exemplary embodiments.
FIG. 5 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

### System for Enabling Card Payments in Open Banking

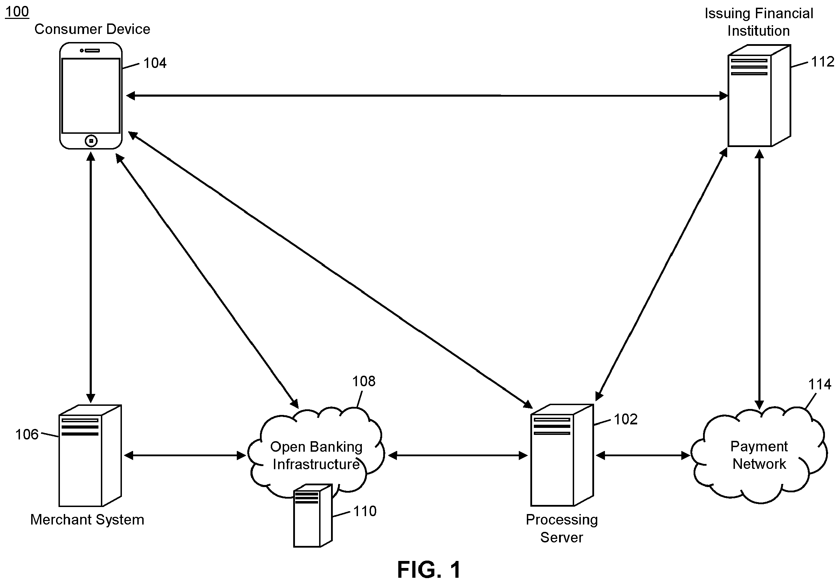

FIG. 1 illustrates a system 100 for enabling credit card payments to be made using open banking infrastructure via the use of mapped virtual account.

**The** system 100 can include a processing server 102. The processing server 102, discussed in more detail below, can be a computing system that provides for the generation and mapping of virtual accounts on behalf of an open banking provider, such as an open banking entity 110 discussed in more detail below. In some embodiments, the processing server 102 can be an open banking provider, such as the open banking entity 110 or other entity configured to provide open banking services to consumers.

**The** system 100 can also include a consumer device 104. The consumer device 104 can be a computing device used by a consumer to interact with other components in the system 100 for making payments via an open banking infrastructure 108 including credit card payments made using the open banking infrastructure 108. The consumer device 104 can be any type of computing device suitable for performing the functions discussed herein, such as a desktop computer, laptop computer, notebook computer, tablet computer, cellular phone, smart phone, smart watch, smart television, wearable computing device, implantable computing device, etc.

**As** noted above, when used herein "open banking" can refer to banking that is performed through the use of infrastructure separate from payment networks and their associated infrastructure, also known as payment rails, as discussed below. Open banking typically utilizes the Internet, where the open banking infrastructure 108 can refer to APIs and other communication methods and paths between open banking entities 110 and other participants in open banking, such as the consumer device 104, merchant system 106, and processing server 102.

In many cases, participants in open banking can be entities not traditionally involved in financial services. Because of the open nature of the open banking infrastructure 108, any entity with a sufficient and secure Internet connection can participate in open banking and offer services to other participants, even entities that are not financial institutions or directly involved in transaction accounts or payment transactions. For instance, open banking has enabled third party service providers to provide budgeting assistance to consumers, can speed up the process for mortgages and loans by providing direct access to financial data upon consumer approval, and can make it easier for friends and family to make payments back and forth. For businesses, open banking has enabled more service providers to offer services regarding invoice generation, payment tracking, cash flow projections, and payroll management, as well as providing another avenue to receive payment to reach a greater number of potential customers.

**The** consumer can interact with a merchant system 106 via their consumer device 104 using any suitable communication network and method, such as via an application program executed on the consumer device 104 associated with the merchant system 106, a web page associated with the merchant system 106, or other interface in communication with an API of the merchant system 106. The consumer device 104 can initiate a process to make a payment to a merchant associated with the merchant system 106, such as part of a transaction for goods or services. As part of the process, the merchant system 106 can prompt the consumer, via the consumer device 104, to select a payment method, where the prompt can include open banking as a potential payment method.

If the consumer, via the consumer device 104, selects open banking as their preferred method for paying the merchant, then the consumer device 104 can be directed to an open banking entity 110 via the open banking infrastructure 108. The open banking entity 110 can be an entity that offers financial services to consumers via the open banking infrastructure 108. The open banking infrastructure 108 can refer to any devices and communication paths that are utilized to provide communications for transactions and other services. In some cases, the open banking infrastructure 108 can utilize specially programmed computing systems, the Internet, and APIs between the computing systems.

**The** open banking entity 110 can provide an interface, such as via a web page, application program, API, etc. to the consumer device 104 to prompt the consumer to select one or more available depository, or debit, accounts registered by the consumer for use in making the desired payment with the merchant system 106. In a traditional process, the consumer device 104 would receive a selection of a debit account from the consumer, the consumer device 104 would communicate the selected debit account to the open banking entity 110, and then the open banking entity 110 would debit the selected debit account, transfer the appropriate amount to the merchant system 106 via the open banking infrastructure, and provide notifications to the consumer device 104 and merchant system 106 of the completed transaction.

In the system 100, the consumer can be interested in registering a credit card transaction account for use in making the payment to the merchant system 106 using the open banking infrastructure. As used herein, transaction account refers to financial account that can be used to fund a transaction, where the transaction account can be associated with a consumer, which can be any suitable type of entity associated with a payment account, which can include a person, family, company, corporation, governmental entity, etc. A credit card transaction account, as used herein, can refer to a transaction account that operates via credit that traditionally is used via a payment card issued to a consumer, where payment card details (e.g., credit card number, expiration date, security code, street address, and name) are supplied by the consumer via a physical payment card or an electronic form, for use in making payment via the associated transaction account.

**The** system 100 can include an issuing financial institution 112. An issuing financial institution 112 can be an entity that establishes (e.g., opens) a letter or line of credit in favor of a beneficiary, and honors drafts drawn by the beneficiary against the amount specified in the letter or line of credit. In many instances, the issuing financial institution 112 can be a bank or other financial institution authorized to open lines of credit. In some instances, any entity that can extend a line of credit to a beneficiary can be considered an issuing financial institution 112. The line of credit opened by the issuer can be represented in the form of a credit card transaction account. An issuing financial institution 112 can also offer additional types of payment accounts to consumers as will be apparent to persons having skill in the relevant art, such as debit accounts, prepaid accounts, electronic wallet accounts, savings accounts, checking accounts, etc., and may provide consumers with physical or non-physical means for accessing and/or utilizing such an account, such as debit cards, prepaid cards, automated teller machine cards, electronic wallets, checks, etc.

In the system 100, the issuing financial institution 112 can issue the credit card transaction account to the consumer and, as part of the issuance, issue a credit card to the consumer that includes suitable payment details. The consumer can, via the consumer device 104, register the credit card with the processing server 102. As discussed herein, the processing server 102 can provide services on behalf of the open banking entity 110 for enabling credit card payments. In some embodiments, the processing server 102 and open banking entity 110 can be the same system, where any functions discussed herein performed by the processing server 102 or open banking entity 110 can be performed by either system.

To register the credit card, the consumer device 104 may provide payment details for the credit card to the processing server 102. Payment details can include any data suitable for use by an issuing financial institution 112 or other entity in identifying the associated transaction account and processing payment therefrom. Payment details can include, for example, a transaction account number, name, billing address, security code, digital token, controlled payment number, etc. In some embodiments, the consumer device 104 can directly transmit the payment details to the processing server 102 via a suitable communication network and method. In other embodiments, the consumer device 104 can provide authentication information to the processing server 102 to authenticate the identity of the consumer, which the processing server 102 can provide to the issuing financial institution 112 in a request for the payment details. The issuing financial institution 112 can authenticate the consumer, identify the payment details, and provide them to the processing server 102 using a suitable communication network and method. In some cases, the issuing financial institution 112 can request permission from the consumer, via the consumer device 104, to release the payment details to the processing server 102.

Once the processing server 102 has received the payment details for the credit card transaction account, the processing server 102 can generate a virtual account that will be used in communications made via the open banking infrastructure. The virtual account can be represented to the merchant system 106 as a traditional debit account and represented to the consumer device 104 as the associated credit card transaction account, such as by using the same name and last four digits of the payment card. The virtual account can be generated with a balance that is equivalent to the current available credit for the associated credit card transaction account, where the balance can be available as an amount eligible for use by the consumer in making a payment. Once the virtual account has been generated, the processing server 102 can map the generated virtual account to the credit card transaction account in a memory, such as a mapping database, of the processing server 102. The mapping can indicate a direct association between the generated virtual account and the credit card transaction account, where payments initiated from the generated virtual account will be paid via the mapped credit card transaction account.

After the registration process is complete, the consumer device 104 can be presented with the virtual account in the list of accounts available for making a payment to the merchant associated with the merchant system 106. The consumer device 104 can display the list of available accounts, including the virtual account, to the consumer for selection for the desired payment. The consumer can select the virtual account, which can result in an electronic transmission of an account identifier for the virtual account from the consumer device 104 to the processing server 102 using a suitable communication network and method, along with any other suitable data, such as the payment amount or a transaction identifier that can be included in any communications made with the processing server 102 related to the desired transaction. An account identifier can be any unique value associated with an account used for the identification thereof, such as a unique number, alphanumeric value, hash value, etc. In some cases, the account identifier can be unique as to all accounts associated with the consumer of the consumer device 104. In such cases, the account identifier can be a value set by the consumer for identification of the associated account, such as a custom name. In some embodiments, all communications between the processing server 102 and the consumer device 104 can be made using the open banking infrastructure 108.

**The** processing server 102 can receive the account selection from the consumer device 104 and identify the account associated with the provided account identifier. The processing server 102 can identify that the account is a virtual account and can then identify the mapped credit card transaction account. The processing server 102 can then generate an authorization request for a credit card payment transaction, where the payment details for the credit card transaction account are used for the funding source in the authorization request and account details for the merchant's transaction account are used for the funding destination in the authorization request. The authorization request can then be electronically transmitted to a payment network 114 for processing of the credit card payment transaction using traditional methods. In some cases, transmissions between the processing server 102 and the payment network 114 can be made using payment rails associated with the payment network 114, which can refer to the physical payment network, such as the equipment, hardware, and software comprising the payment network. An authorization request can be a transaction message, which is a specially formatted data message that is configured for transmission via the payment rails that is formatted pursuant to one or more standards governing financial transaction messages, such as the International Organization of Standardization's ISO 8583 or ISO 20022 formats.

When the credit card payment transaction is completed, such as can be indicated by receipt of an authorization response from the payment network 114 by the processing server 102, the processing server 102 can provide a notification of the successful transaction to the consumer device 104, open banking entity 110, and/or merchant system 106. In cases where the processing server 102 operates on behalf of the open banking entity 110, the open banking entity 110 can transmit a notification message to the merchant system 106. The notification message transmitted to the merchant system 106 can indicate that the transaction was completed using the virtual account and the open banking infrastructure 108, which can enable the consumer to use a credit card for payments to the merchant without requiring any change or modification to merchant systems 106.

In some embodiments, the processing server 102 can utilize a different transaction account for a merchant system 106 for receipt of credit card payments. In such embodiments, the processing server 102 can identify (e.g., via information provided by the merchant system 106 or an associated entity, such as an acquiring financial institution) a transaction account used by the merchant system 106 in receiving credit card payments. This transaction account can be mapped to the standard account used by the merchant system 106 for open banking transactions. When the processing server 102 receives the account selection from the consumer device 104 that indicates use of a virtual account mapped to a credit card transaction account, the processing server 102 can identify the transaction account mapped to the merchant's standard account for inclusion in the authorization request.

In some cases, the processing server 102 can also utilize a mapped merchant account for use in receiving credit card payments, which can be used to ensure the merchant system 106 receives the funds only using the open banking infrastructure 108. In such cases, the mapped merchant account can be associated with the specific merchant system 106 and be unique to that merchant system 106 or can be a general account used by the processing server 102 for credit card transactions. In such an embodiment, when a credit card payment is desired by the consumer device 104, the processing server 102 can identify the mapped merchant account for inclusion in the authorization request as the funding destination for the credit card transaction. The credit card transaction can be processed, which can result in payment from the consumer's credit card transaction account to the mapped merchant account. The processing server 102 can then transfer the payment amount from the mapped merchant account to the generated virtual account, and then from the generated virtual account to the merchant system's standard account, or directly between the mapped merchant account to the merchant system's standard account, using standard processes of the open banking infrastructure 108. In such an instance, the merchant system 106 will receive the payment via a debit account used in the open banking infrastructure 108. In such cases, the merchant system 106 can be unaware of the payment being initially from a credit card transaction account.

In some cases, open banking can be subject to one or more standards, such as open banking standards that are applicable in the United Kingdom and apply to all communications made via an open banking infrastructure 108. In such cases, the processing server 102 can be configured to ensure that all communications made via the open banking infrastructure are in compliance with all applicable standards, such as with respect to provided user interfaces and use of APIs. In some instances, regulations can apply to functions performed by the components of the system 100 discussed herein. For example, the Revised Payment Services Directive (PSD2) is a directive of the European Union that is applicable to open banking and defines rules and standards that must be followed by participants. In such instances, the processing server 102 can ensure that all communications and transactions comply with the applicable regulations. In some cases, the processing server 102 can be configured to ensure that the credit card payment transaction complies with all standards and regulations applicable to such a transaction while also ensuring that the messaging and transfers made via open banking are also in compliance with any applicable standards and regulations.

**The** methods and systems discussed herein enable a consumer to make a credit card payment via an open banking infrastructure 108 via the use of a virtual account mapped to the credit card transaction account. The result provides for significantly greater convenience and security to consumers, while not requiring any changes to existing merchants' systems 106 to provide for wide adoption. This, in turn, provides for significant improvements over traditional open banking systems that can benefit both consumers and merchants, as well as increase engagement between consumers and existing open banking entities 110. In cases where standards and regulations govern open banking and/or credit card transactions, the systems and methods discussed herein can provide even greater convenience for participants by streamlining what could be a significantly difficult new service to adopt for merchants.

### Processing Server

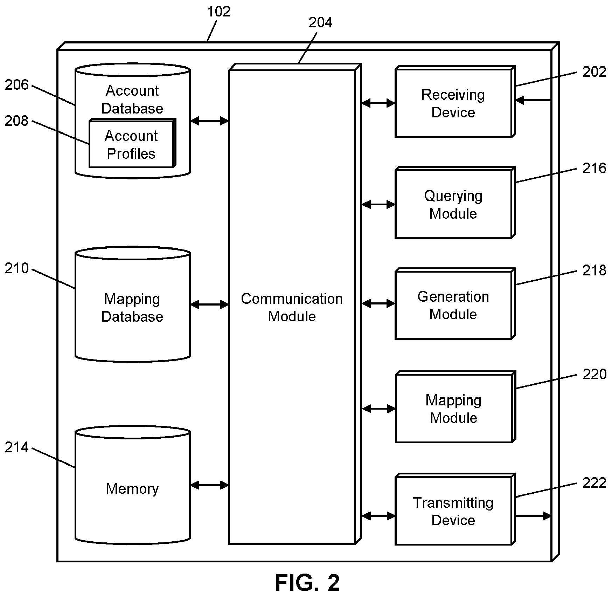

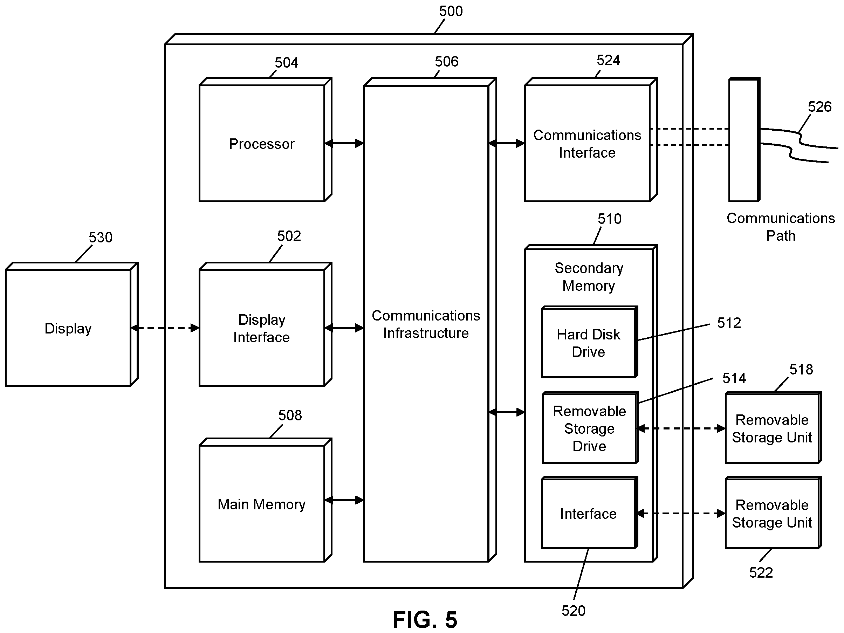

FIG. 2 illustrates an embodiment of a processing server 102. It will be apparent to persons having skill in the relevant art that the embodiment of the processing server 102 illustrated in FIG. 2 is provided as illustration only and cannot be exhaustive to all possible configurations of the processing server 102 suitable for performing the functions as discussed herein. For example, the computer system 500 illustrated in FIG. 5 and discussed in more detail below can be a suitable configuration of the processing server 102. In some cases, additional components of the system 100, such as the consumer device 104, merchant system 106, open banking entity 110, and issuing financial institution 112 can include the components illustrated in FIG. 2 and discussed below.

**The** processing server 102 can include a receiving device 202. The receiving device 202 can be configured to receive data over one or more networks via one or more network protocols. In some instances, the receiving device 202 can be configured to receive data from consumer devices 104, merchant systems 106, open banking entities 110, issuing financial institutions 112, payment networks 114, and other systems and entities via one or more communication methods, such as radio frequency, local area networks, wireless area networks, cellular communication networks, Bluetooth, the Internet, etc. In some embodiments, the receiving device 202 can be comprised of multiple devices, such as different receiving devices for receiving data over different networks, such as a first receiving device for receiving data over a local area network and a second receiving device for receiving data via the Internet, or a first receiving device for receiving data via the open banking infrastructure 108 and a second receiving device for receiving data via payment rails of a payment network 114. The receiving device 202 can receive electronically transmitted data signals, where data can be superimposed or otherwise encoded on the data signal and decoded, parsed, read, or otherwise obtained via receipt of the data signal by the receiving device 202. In some instances, the receiving device 202 can include a parsing module for parsing the received data signal to obtain the data superimposed thereon. For example, the receiving device 202 can include a parser program configured to receive and transform the received data signal into usable input for the functions performed by the processing device to carry out the methods and systems described herein.

**The** receiving device 202 can be configured to receive data signals electronically transmitted by consumer devices 104 that can be superimposed or otherwise encoded with payment requests, payment details, authentication data, etc. The receiving device 202 can also be configured to receive data signals electronically transmitted by merchant systems 106, which can be superimposed or otherwise encoded with account data, routing information, etc. The receiving device 202 can also be configured to receive data signals electronically transmitted by open banking entities 110 that can be superimposed or otherwise encoded with payment requests, account data, payment details, virtual account data, mapping data, etc. The receiving device 202 can also be configured to receive data signals electronically transmitted by issuing financial institutions 112, which can be superimposed or otherwise encoded with payment details, authentication requests, authorization responses, transaction messages, etc. The receiving device 202 can also be configured to receive data signals electronically transmitted by a payment network 114 that can be superimposed or otherwise encoded with transaction messages.

The processing server 102 can also include a communication module 204. The communication module 204 can be configured to transmit data between modules, engines, databases, memories, and other components of the processing server 102 for use in performing the functions discussed herein. The communication module 204 can be comprised of one or more communication types and utilize various communication methods for communications within a computing device. For example, the communication module 204 can be comprised of a bus, contact pin connectors, wires, etc. In some embodiments, the communication module 204 can also be configured to communicate between internal components of the processing server 102 and external components of the processing server 102, such as externally connected databases, display devices, input devices, etc. The processing server 102 can also include a processing device. The processing device can be configured to perform the functions of the processing server 102 discussed herein as will be apparent to persons having skill in the relevant art. In some embodiments, the processing device can include and/or be comprised of a plurality of engines and/or modules specially configured to perform one or more functions of the processing device, such as a querying module 216, generation module 218, mapping module 220, etc. As used herein, the term "module" can be software or hardware particularly programmed to receive an input, perform one or more processes using the input, and provides an output. The input, output, and processes performed by various modules will be apparent to one skilled in the art based upon the present disclosure.

**The** processing server 102 can also an account database 206. The account database 206 can be configured to store one or more account profiles 208 using a suitable data storage format and schema. The account database 206 can be a relational database that utilizes structured query language for the storage, identification, modifying, updating, accessing, etc. of structured data sets stored therein. Each account profile 208 can be a structured data set configured to store data related to a consumer account, which can include, for example, account identifiers for one or more debit accounts, generated virtual account information, payment details for one or more credit card transaction accounts, balance information, contact information for a consumer device 104, etc.

The processing server 102 can also include a mapping database 210. The mapping database 210can be configured to store data regarding links between virtual accounts and credit card transaction accounts using a suitable data storage format and schema. The mapping database 210 can be a relational database that utilizes structured query language for the storage, identification, modifying, updating, accessing, etc. of structured data sets stored therein. The mapping database 210 can include structured data sets configured to store data related to the links between virtual accounts and credit card transaction accounts, such as account identifiers, payment details, etc.

The processing server 102 can also include a memory 214. The memory 214 can be configured to store data for use by the processing server 102 in performing the functions discussed herein, such as public and private keys, symmetric keys, etc. The memory 214 can be configured to store data using suitable data formatting methods and schema and can be any suitable type of memory, such as read-only memory, random access memory, etc. The memory 214 can include, for example, encryption keys and algorithms, communication protocols and standards, data formatting standards and protocols, program code for modules and application programs of the processing device, and other data that can be suitable for use by the processing server 102 in the performance of the functions disclosed herein as will be apparent to persons having skill in the relevant art. In some embodiments, the memory 214 can be comprised of or can otherwise include a relational database that utilizes structured query language for the storage, identification, modifying, updating, accessing, etc. of structured data sets stored therein. The memory 214 can be configured to store, for example, cryptographic keys, cryptographic key pairs, cryptographic algorithms, encryption algorithms, communication information, data formatting rules, network identifiers, authentication data, messaging protocol data, etc.

The processing server 102 can include a querying module 216. The querying module 216 can be configured to execute queries on databases to identify information. The querying module 216 can receive one or more data values or query strings, and can execute a query string based thereon on an indicated database, such as the entity database 206 of the processing server 102 to identify information stored therein. The querying module 216 can then output the identified information to an appropriate engine or module of the processing server 102 as necessary. The querying module 216 can, for example, execute a query on the account database 206 to identify an account profile 208 that includes an account identifier included in a payment request to identify the connected debit accounts and any virtual accounts.

The processing server 102 can also include a generation module 218. The generation module 218 can be configured to generate data for use by the processing server 102 in performing the functions discussed herein. The generation module 218 can receive instructions as input, can generate data based on the instructions, and can output the generated data to one or more modules of the processing server 102. For example, the generation module 218 can be configured to generate data messages, notification messages, cryptographic keys, transaction messages, virtual accounts, etc.

The processing server 102 can also include a mapping module 220. The mapping module 220 can be configured to map virtual accounts to transaction accounts and identify mapped accounts for the processing server 102 as part of the functions discussed herein. The mapping module 220 can receive instructions as input, which can also include data to be used in performing a mapping or identification, can perform a mapping or identification as requested, and can output a result of the mapping or identification to another module or engine of the processing server 102. The mapping module 220 can, for example, be configured to map a generated virtual account to a credit card transaction account, map a mapped merchant account to a standard account for a merchant system 106, and identify a credit card transaction account mapped to a generated virtual account.

The processing server 102 can also include a transmitting device 222. The transmitting device 222 can be configured to transmit data over one or more networks via one or more network protocols. In some instances, the transmitting device 222 can be configured to transmit data consumer devices 104, merchant systems 106, open banking entities 110, issuing financial institution 112, payment networks 114, and other entities via one or more communication methods, local area networks, wireless area networks, cellular communication, Bluetooth, radio frequency, the Internet, etc. In some embodiments, the transmitting device 222 can be comprised of multiple devices, such as different transmitting devices for transmitting data over different networks, such as a first transmitting device for transmitting data over a local area network and a second transmitting device for transmitting data via the Internet, or a first transmitting device for transmitting data via the open banking infrastructure 108 and a second transmitting device for transmitting data via payment rails of the payment network 114. The transmitting device 222 can electronically transmit data signals that have data superimposed that can be parsed by a receiving computing device. In some instances, the transmitting device 222 can include one or more modules for superimposing, encoding, or otherwise formatting data into data signals suitable for transmission.

The transmitting device 222 can be configured to electronically transmit data signals to consumer devices 104 that are superimposed or otherwise encoded with account lists, requests for authentication data or payment details, notification messages, etc. The transmitting device 222 can also be configured to electronically transmit data signals to merchant systems 106, which can be superimposed or otherwise encoded with requests for account data, notification messages, transaction messages, etc. The transmitting device 222 can also be configured to electronically transmit data signals to open banking entities 110 that can be superimposed or otherwise encoded with payment request data, requests for account data, requests for payment details, transaction messages, notification messages, currency transfer requests, etc. The transmitting device 222 can also be configured to electronically transmit data signals to issuing financial institutions 112, which can be superimposed or otherwise encoded with authentication data, requests for payment details, transaction messages, notification messages, etc. The transmitting device 222 can also be configured to electronically transmit data signals to payment networks 114 that can be superimposed or otherwise encoded with transaction messages.

### Process for Enabling Card Payment via Open Banking

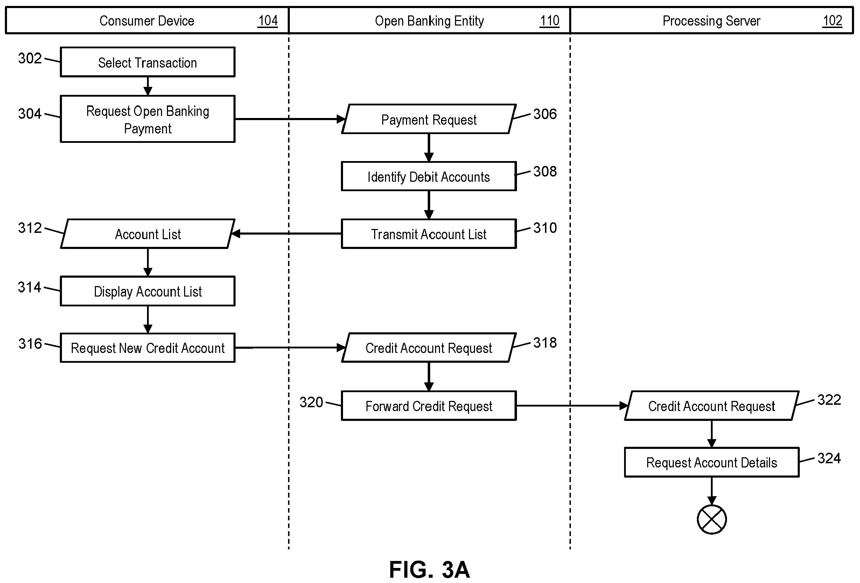

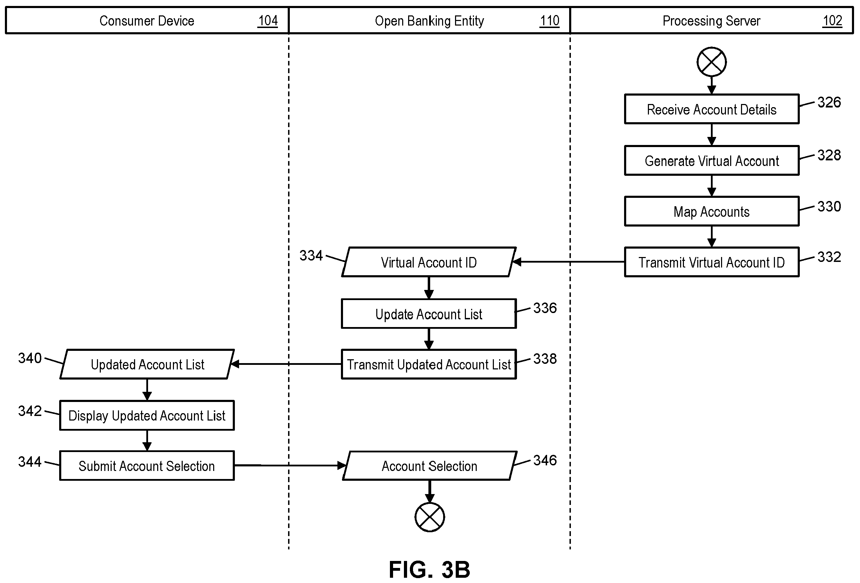

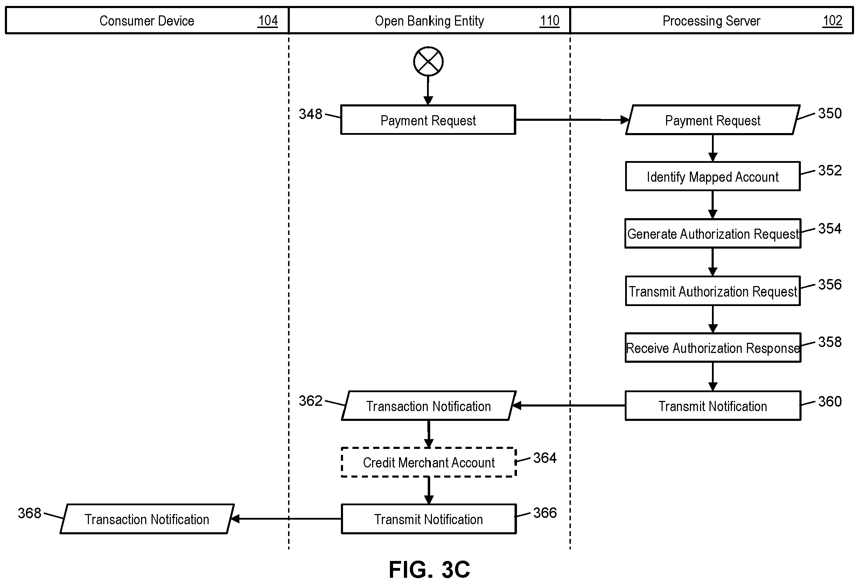

FIGS. 3A-3C illustrates a process for enabling credit card payments to be made via open banking infrastructure 108 in the system 100 of FIG. 1.

In step 302, the consumer device 104 can present an interface to a user thereof and receive a selection of a transaction desired by the user. The transaction can be a payment to be made to a merchant of a specific transaction amount, such as for the purchase of goods or services. In step 304, the consumer device 104 can request, as a result of selections by the user, that the payment be made via open banking. The request can be electronically transmitted by the consumer device 104 (e.g., directly or via a merchant system 106, such as via an application program or web page of the merchant system 106) to an open banking entity 110, such as via the open banking infrastructure 108.

In step 306, the open banking entity 110 can receive (e.g., via a receiving device 202) the payment request. The payment request can include at least a profile identifier associated with the consumer that is associated with an account registered by the consumer with the open banking platform. The payment request can also include an identifier associated with the merchant or a transaction account of the merchant, as well as the transaction amount for the desired transaction. In step 308, the open banking entity 110 can identify (e.g., via a querying module 216) a list of all debit accounts registered with the consumer for use in funding payments (e.g., in an account profile 208 identified using the profile identifier). In step 310, the open banking entity 110 can transmit (e.g., via a transmitting device 222) the account list to the consumer device 104.

In step 312, the consumer device 104 can receive the account list. The account list can include a name or other reference to each debit account, an available balance for each debit account, as well as an account identifier associated with each debit account. In step 314, the consumer device 104 can display the list of debit accounts can to the user. In some cases, only the name and balance for each account may be displayed. The consumer device 104 can also display, as part of the account list, an option for the user to add a new account, which can be a debit account or a credit account. The user may select the option to add a new credit account via a suitable input device of the consumer device 104. Then, in step 316, the consumer device 104 can electronically transmit a request for a new credit account to the open banking entity 110, such as using the open banking infrastructure 108.

In step 318, the open banking entity 110 can receive (e.g., via a receiving device 202) the new credit account request from the consumer device 104. The credit account request can include at least the account identifier associated with the consumer as well as information identifying the consumer and the desired credit card transaction account for the issuing financial institution 112 that issued the credit card transaction account. The information identifying the consumer can include, for instance, a username, e-mail address, password, name, etc. or a combination thereof. The information identifying the desired credit card transaction account can include the account number, a portion (e.g., last four digits) of the account number, a reference name for the account, etc. In step 320, the open banking entity 110 can forward (e.g., via a transmitting device 222) the credit account request to the processing server 102, such as via the open banking infrastructure 108.

In step 322, the receiving device 202 of the processing server 102 can receive the credit account request from the open banking entity 110. In step 324, the transmitting device 222 of the processing server 102 can electronically transmit a request for account details to the issuing financial institution 112 that issued the credit card transaction account, which can be identified using data included in the credit account request. The request for account details can use the identification information included in the credit account request. The issuing financial institution 112 can use the identification information to identify the consumer's accounts with the institution including the desired credit card transaction account. In some cases, the issuing financial institution 112 can separately communicate with the consumer device 104 to request approval to identify the credit card transaction account for the processing server 102. Once the issuing financial institution 112 identifies the credit card transaction account, the issuing financial institution 112 can identify the payment details for the credit card transaction account and transmit the payment details to the processing server 102 for receipt by the receiving device 202 of the processing server, in step 326.

In step 328, the generation module 218 of the processing server 102 can generate a new virtual account to use in the open banking infrastructure 108 in place of the credit card transaction account for making payments. The new virtual account can have a name that matches the credit card transaction account (e.g., name of the issuing financial institution 112, reference name provided by the consumer, etc.) as well as an available balance that matches the available credit for the credit card transaction account. In step 330, the mapping module 220 of the processing server 102 can map the generated virtual account to the credit card transaction account, such as by storing an account identifier for the generated virtual account and the payment details for the credit card transaction account in the mapping database 210 of the processing server 102. In step 332, the transmitting device 222 of the processing server 102 can electronically transmit the account identifier for the generated virtual account to the open banking entity 110, such as using the open banking infrastructure 108.

In step 334, the open banking entity 110 can (e.g., via a receiving device 202) receive the account identifier for the generated virtual account from the processing server 102. In some cases, the open banking entity 110 can also receive the name and available balance for the virtual account. In step 336, the open banking entity 110 can update the account list for the consumer to include the newly registered virtual account. In step 338, the open banking entity 110 can (e.g., via a transmitting device 222) transmit the updated account list to the consumer device 104, such as using the open banking infrastructure 108. In step 340, the consumer device 104 can receive the updated account list.

In step 342, the consumer device 104 can display the updated account list to the consumer, which will also display the newly added virtual account that is mapped to the consumer's credit card transaction account. Using a suitable input device of the consumer device 104, the consumer can select the virtual account for use in funding the desired payment transaction. In step 344, the consumer device 104 can submit the selection of the virtual account to the open banking entity 110 by transmitting the account identifier associated therewith to the open banking entity 110, such as using the open banking infrastructure 108, along with any other suitable data, such as the profile identifier associated with the consumer or a transaction identifier for use in identifying the desired transaction to which the selection corresponds.

In step 346, the open banking entity 110 can receive (e.g., via a receiving device 202) the account selection from the consumer device 104 that includes the account identifier for the generated virtual account. In step 348, the open banking entity 110 can transmit (e.g., via a transmitting device 222) a payment request to the processing server 102 using a suitable communication network and method, such as the open banking infrastructure 108. The payment request can include the account identifier for the virtual account, an account identifier for the merchant account associated with the merchant that is to receive payment, and the transaction amount. In step 350, the receiving device 202 of the processing server 102 can receive the payment request from the open banking entity 110.

In step 352, the processing server 102 can identify that the account identifier in the payment request is associated with a virtual account and can instruct the querying module 216 of the processing server 102 to execute a query on the mapping database 210 of the processing server 102 to identify the credit card transaction account mapped to the generated virtual account. In step 354, the generation module 218 of the processing server 102 can generate an authorization request for an electronic payment transaction that includes the payment details for the credit card transaction account identified in step 352, the account identifier for the merchant account included in the payment request, and the transaction amount included in the payment request. In step 356, the transmitting device 222 of the processing server 102 can electronically transmit the authorization request, which is a specially formatted transaction messaged, to a payment network 114 for processing using traditional methods.

**The** payment network 114 can process the electronic payment transaction for payment of the transaction amount from the credit card transaction account to the merchant's transaction account. In step 358, the receiving device 202 of the processing server 102 can receive an authorization response for the electronic payment transaction that indicates approval of the payment transaction. In step 360, the generation module 218 of the processing server 102 can generate a notification message, which can be transmitted, by the transmitting device 222 of the processing server 102, to the open banking entity 110, such as using the open banking infrastructure 108. The notification message can include an indication of the successful payment from the consumer to the merchant, and can include references to the transaction accounts, the transaction amount, or any other suitable information.

In step 362, the open banking entity 110 can receive (e.g., via a receiving device 202) the notification message from the processing server 102. In cases where the credit card payment is made to a mapped merchant account, the process can include step 364, where the open banking entity 110 can identify (e.g., via a querying module 216) the standard transaction account for the merchant that is mapped to the mapped merchant account and can transfer the funds from the mapped merchant account to the standard transaction account to credit the merchant for the payment. In step 366, the open banking entity 110 can transmit (e.g., via a transmitting device 222) a notification message to the consumer device 104 indicating successful credit card payment to the merchant for the transaction amount, such as via the open banking infrastructure 108. In step 368, the consumer device 104 can receive the notification message, which can be displayed to the consumer to inform them of the successful payment.

### Exemplary Method for Enabling Card Payments in Open Banking

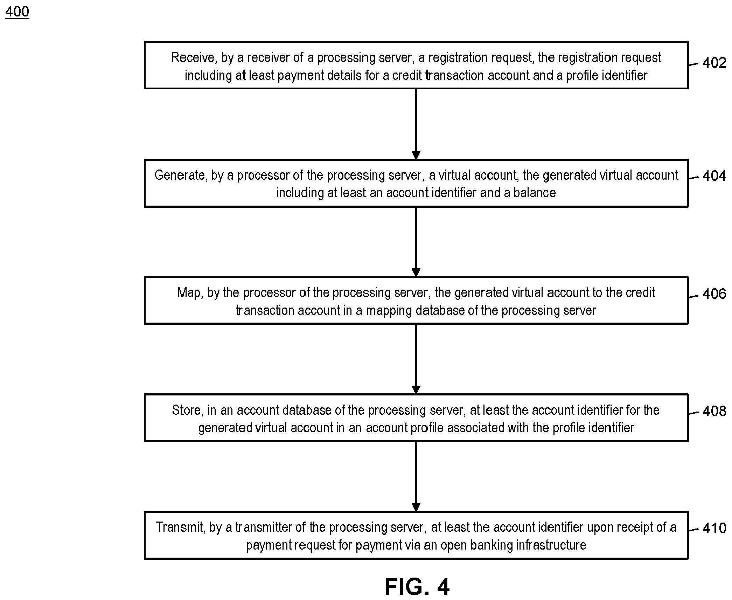

FIG. 4 illustrates a method 400 for enabling credit card payments in open banking through the use of a mapped virtual account.

In step 402, a registration request can be received by a receiver (e.g., receiving device 202) of a processing server (e.g., processing server 102), the registration request including at least payment details for a credit transaction account and a profile identifier. In step 404, a virtual account can be generated by a processor (e.g., generation module 218), the generated virtual account including at least an account identifier and a balance. In step 406, the generated virtual account can be mapped by the processor (e.g., mapping module 220) of the processing server to the credit transaction account in a mapping database (e.g., mapping database 210) of the processing server.

In step 408, at least the account identifier for the generated virtual account can be stored in an account database (e.g., account database 206) of the processing server in an account profile (e.g., account profile 208) associated with the profile identifier. In step 410, at least the account identifier can be transmitted by a transmitter (e.g., transmitting device 222) of the processing server upon receipt of a payment request for payment via an open banking infrastructure (e.g., open banking infrastructure 108).

In one embodiment, the method 400 can further include: receiving, by the receiver of a processing server, the payment request from a computing device (e.g., consumer device 104), the payment request including at least the profile identifier; and identifying, by the processor (e.g., querying module 216) of the processing server, the account profile based on the profile identifier, the account profile further including an identifier associated with each of one or more debit accounts, wherein the identifier associated with each of the one or more debit accounts is transmitted with the account identifier, and the identifier associated with each of the one or more debit accounts and the account identifier are transmitted to the computing device. In a further embodiment, the method 400 can even further include: receiving, by the receiver of the processing server, an account selection message from the computing device, the account selection message including at least the account identifier; and transmitting, by the transmitter of the processing server, the account identifier to an open banking computing system (e.g., open banking entity 110).

In an even further embodiment, the account identifier can be transmitted to the open banking computing system using the open banking infrastructure. In another even further embodiment, the method 400 can also include: receiving, by the receiver of the processing server, a payment message from a merchant computing system (e.g., merchant system 106), the payment message including at least the account identifier and a transaction amount; identifying, by the processor (e.g., querying module 216) of the processing server, the payment details for the credit transaction account mapped to the generated virtual account based on the account identifier; generating, by the processor (e.g., generation module 218) of the processing server, an authorization request for a credit transaction, the authorization request including at least the payment details and the transaction amount; and transmitting, by the transmitter of the processing server, the generated authorization request to a financial institution (e.g., issuing financial institution 112) associated with the credit transaction account using payment rails. In a still further embodiment, the financial institution can reduce an available credit amount for the credit transaction account based on the transaction amount.

In some embodiments, the registration request can be received from the computing device. In one embodiment, the method 400 can also include: transmitting, by the transmitter of the processing server, a detail request message to a financial institution (e.g., issuing financial institution 112) associated with the credit transaction account, the detail request message including at least the payment details; and receiving, by the receiver of the processing server, transaction account data from the financial institution, the transaction account data including at least an available credit amount, wherein the balance is based on the available credit amount.

### Computer System Architecture

FIG. 5 illustrates a computer system 500 in which embodiments of the present disclosure, or portions thereof, can be implemented as computer-readable code. For example, the processing server 102, consumer device 104, merchant system 106, open banking entity 110, and issuing financial institution 112 can be implemented in the computer system 500 using hardware, non-transitory computer readable media having instructions stored thereon, or a combination thereof and can be implemented in one or more computer systems or other processing systems. Hardware can embody modules and components used to implement the methods of FIGS. 3A-3C and 4.

If programmable logic is used, such logic can execute on a commercially available processing platform configured by executable software code to become a specific purpose computer or a special purpose device (e.g., programmable logic array, application-specific integrated circuit, etc.). A person having ordinary skill in the art can appreciate that embodiments of the disclosed subject matter can be practiced with various computer system configurations, including multi-core multiprocessor systems, minicomputers, mainframe computers, computers linked or clustered with distributed functions, as well as pervasive or miniature computers that can be embedded into virtually any device. For instance, at least one processor device and a memory can be used to implement the above-described embodiments.

**A** processor unit or device as discussed herein can be a single processor, a plurality of processors, or combinations thereof. Processor devices can have one or more processor "cores." The terms "computer program medium," "non-transitory computer readable medium," and "computer usable medium" as discussed herein are used to generally refer to tangible media such as a removable storage unit 518, a removable storage unit 522, and a hard disk installed in hard disk drive 512.

Various embodiments of the present disclosure are described in terms of this example computer system 500. After reading this description, it will become apparent to a person skilled in the relevant art how to implement the present disclosure using other computer systems and/or computer architectures. Although operations can be described as a sequential process, some of the operations can in fact be performed in parallel, concurrently, and/or in a distributed environment, and with program code stored locally or remotely for access by single or multi-processor machines. In addition, in some embodiments the order of operations can be rearranged without departing from the spirit of the disclosed subject matter.

Processor device 504 can be a special purpose or a general-purpose processor device specifically configured to perform the functions discussed herein. The processor device 504 can be connected to a communications infrastructure 506, such as a bus, message queue, network, multi-core message-passing scheme, etc. The network can be any network suitable for performing the functions as disclosed herein and can include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 500 can also include a main memory 508 (e.g., random access memory, read-only memory, etc.), and can also include a secondary memory 510. The secondary memory 510 can include the hard disk drive 512 and a removable storage drive 514, such as a floppy disk drive, a magnetic tape drive, an optical disk drive, a flash memory, etc.

**The** removable storage drive 514 can read from and/or write to the removable storage unit 518 in a well-known manner. The removable storage unit 518 can include a removable storage media that can be read by and written to by the removable storage drive 514. For example, if the removable storage drive 514 is a floppy disk drive or universal serial bus port, the removable storage unit 518 can be a floppy disk or portable flash drive, respectively. In one embodiment, the removable storage unit 518 can be non-transitory computer readable recording media.

In some embodiments, the secondary memory 510 can include alternative means for allowing computer programs or other instructions to be loaded into the computer system 500, for example, the removable storage unit 522 and an interface 520. Examples of such means can include a program cartridge and cartridge interface (e.g., as found in video game systems), a removable memory chip (e.g., EEPROM, PROM, etc.) and associated socket, and other removable storage units 522 and interfaces 520 as will be apparent to persons having skill in the relevant art.

Data stored in the computer system 500 (e.g., in the main memory 508 and/or the secondary memory 510) can be stored on any type of suitable computer readable media, such as optical storage (e.g., a compact disc, digital versatile disc, Blu-ray disc, etc.) or magnetic tape storage (e.g., a hard disk drive). The data can be configured in any type of suitable database configuration, such as a relational database, a structured query language (SQL) database, a distributed database, an object database, etc. Suitable configurations and storage types will be apparent to persons having skill in the relevant art.

**The** computer system 500 can also include a communications interface 524. The communications interface 524 can be configured to allow software and data to be transferred between the computer system 500 and external devices. Exemplary communications interfaces 524 can include a modem, a network interface (e.g., an Ethernet card), a communications port, a PCMCIA slot and card, etc. Software and data transferred via the communications interface 524 can be in the form of signals, which can be electronic, electromagnetic, optical, or other signals as will be apparent to persons having skill in the relevant art. The signals can travel via a communications path 526, which can be configured to carry the signals and can be implemented using wire, cable, fiber optics, a phone line, a cellular phone link, a radio frequency link, etc.

**The** computer system 500 can further include a display interface 502. The display interface 502 can be configured to allow data to be transferred between the computer system 500 and external display 530. Exemplary display interfaces 502 can include high-definition multimedia interface (HDMI), digital visual interface (DVI), video graphics array (VGA), etc. The display 530 can be any suitable type of display for displaying data transmitted via the display interface 502 of the computer system 500, including a cathode ray tube (CRT) display, liquid crystal display (LCD), light-emitting diode (LED) display, capacitive touch display, thin-film transistor (TFT) display, etc.

Computer program medium and computer usable medium can refer to memories, such as the main memory 508 and secondary memory 510, which can be memory semiconductors (e.g., DRAMs, etc.). These computer program products can be means for providing software to the computer system 500. Computer programs (e.g., computer control logic) can be stored in the main memory 508 and/or the secondary memory 510. Computer programs can also be received via the communications interface 524. Such computer programs, when executed, can enable computer system 500 to implement the present methods as discussed herein. In particular, the computer programs, when executed, can enable processor device 504 to implement the methods illustrated by FIGS. 3A-3C and 4, as discussed herein. Accordingly, such computer programs can represent controllers of the computer system 500. Where the present disclosure is implemented using software, the software can be stored in a computer program product and loaded into the computer system 500 using the removable storage drive 514, interface 520, and hard disk drive 512, or communications interface 524.

**The** processor device 504 can comprise one or more modules or engines configured to perform the functions of the computer system 500. Each of the modules or engines can be implemented using hardware and, in some instances, can also utilize software, such as corresponding to program code and/or programs stored in the main memory 508 or secondary memory 510. In such instances, program code can be compiled by the processor device 504 (e.g., by a compiling module or engine) prior to execution by the hardware of the computer system 500. For example, the program code can be source code written in a programming language that is translated into a lower level language, such as assembly language or machine code, for execution by the processor device 504 and/or any additional hardware components of the computer system 500. The process of compiling can include the use of lexical analysis, preprocessing, parsing, semantic analysis, syntax-directed translation, code generation, code optimization, and any other techniques that can be suitable for translation of program code into a lower-level language suitable for controlling the computer system 500 to perform the functions disclosed herein. It will be apparent to persons having skill in the relevant art that such processes result in the computer system 500 being a specially configured computer system 500 uniquely programmed to perform the functions discussed above.

**Techniques** consistent with the present disclosure provide, among other features, systems and methods for enabling credit card payments in open banking via a mapped virtual account. While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or can be acquired from practicing of the disclosure, without departing from the breadth or scope.

## Claims

1. A method for enabling credit card payments for open banking via a mapped virtual account, comprising:
receiving, by a receiver 202 of a processing server 102, a registration request, the registration request including at least a payment detail for a credit transaction account and a profile identifier;
generating, by a processor 504 of the processing server 102, a virtual account, the generated virtual account including at least an account identifier and a balance;
mapping, by the processor 504 of the processing server 102, the generated virtual account to the credit transaction account in a mapping database 210 of the processing server 102;
storing, in an account database 206 of the processing server 102, at least the account identifier for the generated virtual account in an account profile 208 associated with the profile identifier; and
transmitting, by a transmitter 222 of the processing server, at least the account identifier upon receipt of a payment request for payment via an open banking infrastructure 108.

2. The method of claim 1, further comprising:
receiving, by the receiver 202 of the processing server 102, the payment request from a computing device 104, the payment request including at least the profile identifier; and
identifying, by the processor 504 of the processing server 102, the account profile 208 based on the profile identifier, the account profile 208 further including an identifier associated with each of one or more debit accounts, wherein
the identifier associated with each of the one or more debit accounts is transmitted with the account identifier, and
the identifier associated with each of the one or more debit accounts and the account identifier are transmitted to the computing device 104.

3. The method of claim 2, further comprising:
receiving, by the receiver 202 of the processing server 102, an account selection message from the computing device 104, the account selection message including at least the account identifier; and
transmitting, by the transmitter 222 of the processing server 102, the account identifier to an open banking computing system 110.

4. The method of claim 3, wherein the account identifier is transmitted to the open banking computing system 110 using the open banking infrastructure 108.

5. The method of claim 3, further comprising:
receiving, by the receiver 202 of the processing server 102, a payment message from a merchant computing system 106, the payment message including at least the account identifier and a transaction amount;
identifying, by the processor 504 of the processing server 102, the payment detail for the credit transaction account mapped to the generated virtual account based on the account identifier;
generating, by the processor 504 of the processing server 102, an authorization request for a credit transaction, the authorization request including at least the payment detail and the transaction amount; and
transmitting, by the transmitter 222 of the processing server 102, the generated authorization request to a financial institution 112 associated with the credit transaction account using payment rails 114.

6. The method of claim 5, wherein
the financial institution reduces an available credit amount for the credit transaction account based on the transaction amount.

7. The method of claim 1, wherein the registration request is received from the computing device 104.

8. The method of claim 1, further comprising:
transmitting, by the transmitter 222 of the processing server 102, a detail request message to a financial institution 112 associated with the credit transaction account, the detail request message including at least the payment detail; and
receiving, by the receiver 202 of the processing server 108, transaction account data from the financial institution 112, the transaction account data including at least an available credit amount, wherein
the balance is based on the available credit amount.

9. A system for enabling credit card payments for open banking via a mapped virtual account, comprising:
an open banking infrastructure 108; and
a processing server 102, the processing server 102 including
a receiver 202 receiving a registration request, the registration request including at least a payment detail for a credit transaction account and a profile identifier,
a processor 504
generating a virtual account, the generated virtual account including at least an account identifier and a balance,
mapping the generated virtual account to the credit transaction account in a mapping database 210 of the processing server 102, and
storing, in an account database 206 of the processing server, at least the account identifier for the generated virtual account in an account profile 208 associated with the profile identifier, and
a transmitter 222 transmitting at least the account identifier upon receipt of a payment request for payment via the open banking infrastructure 108.

10. The system of claim 9, further comprising:
a computing device 104, wherein
the receiver 202 of the processing server 102 receives the payment request from the computing device 104, the payment request including at least the profile identifier,
the processor 504 of the processing server 102 identifies the account profile 208 based on the profile identifier, the account profile 208 further including an identifier associated with each of one or more debit accounts,
the identifier associated with each of the one or more debit accounts is transmitted with the account identifier, and
the identifier associated with each of the one or more debit accounts and the account identifier are transmitted to the computing device.

11. The system of claim 10, further comprising:
an open banking computing system 110, wherein
the receiver 202 of the processing server 102 receives an account selection message from the computing device 104, the account selection message including at least the account identifier, and
the transmitter 222 of the processing server 102 transmits the account identifier to the open banking computing system 110.

12. The system of claim 11, wherein the account identifier is transmitted to the open banking computing system 110 using the open banking infrastructure 108.

13. The system of claim 11, further comprising:
a merchant computing system 106; and
a financial institution 112 associated with the credit transaction account,
wherein
the receiver 202 of the processing server 102 receives a payment message from the merchant computing system 106, the payment message including at least the account identifier and a transaction amount,
the processor 504 of the processing server 102 identifies the payment detail for the credit transaction account mapped to the generated virtual account based on the account identifier,
the processor 504 of the processing server 102 generates an authorization request for a credit transaction, the authorization request including at least the payment detail and the transaction amount, and
the transmitter 222 of the processing server 102 transmits the generated authorization request to the financial institution 112 using payment rails 114.

14. The system of claim 9, wherein the registration request is received from the computing device 104.

15. The system of claim 9, wherein
the transmitter 222 of the processing server 102 transmits a detail request message to a financial institution 112 associated with the credit transaction account, the detail request message including at least the payment detail,
the receiver 202 of the processing server 102 receives transaction account data from the financial institution 112, the transaction account data including at least an available credit amount, and
the balance is based on the available credit amount.
